# EUROPEAN PATENT APPLICATION

(11) **EP 0 809 035 A2**
(43) Date of publication of application: **26.11.1997**
(21) Application number: 97106889.5
(22) Date of filing: 25.04.1997
(51) Int. Cl.: F16D 21/04

(54) **Multiplier/reduction unit for transmitting motion between two coaxial shafts**

(30) Priority: 24.05.1996 IT PD960134
(71) Applicant: ANTONIO CARRARO S.p.A., 35011 Campodarsego (Padova) (IT)
(72) Inventor: Martignon, Girolamo, 35010 Borgoricco (Padova) (IT)
(74) Representative: Modiano, Guido, Dr.-Ing.

(57) **Abstract**

A multiplier/reduction unit for transmitting motion between two coaxial shafts (11,12), comprising two multiple-disk clutch assemblies (15,16), both of which are adapted to associate, when actuated, the driving shaft (11) with the driven shaft (12), a first one (15) of the assemblies being actuated by hydraulic coupling elements (21), whilst a second one (16) is actuated by mechanical coupling elements (24).

## Description

The present invention relates to a multiplier/reduction unit for transmitting motion between two coaxial shafts.

In the field of farming or earth-moving machines and in other similar fields there is often the need to transmit motion between two coaxial shafts, one being a driven shaft and the other one being a driving shaft.

Transmission between said shafts must occur with maximum efficiency in mechanical terms and often so as to ensure substantially full operating and coupling continuity.

In many cages, in fact, accidental loss of coupling between the two shafts, in addition to being dangerous, can particularly cause damage to the machine or to the operations being performed.

In particular, currently commercially available multiplier/reduction units for the transmission of motion between two coaxial shafts comprise two multiple-disk clutch assemblies, both of which are actuated by hydraulic coupling means.

Although said multiplier/reduction units achieve their intended aim, they are not free from drawbacks; the main one is the fact that motor shutdown or hydraulic system failures can cause a sudden and usually unpredictable deactivation of the clutch assemblies and the uncoupling of the shafts.

A principal aim of the present invention is to provide a multiplier/reduction unit for transmitting motion between two coaxial shafts which solves the above-described drawbacks of conventional units, particularly ensuring continuity in operation even in case of accidental shutdown of the machine or of failure of its hydraulic system.

Accordingly, an object of the present invention is to provide a multiplier/reduction unit featuring high mechanical efficiency.

Another object of the present invention is to provide a multiplier/reduction unit which is constructively not complicated, with a consequent reduction in production and selling costs.

Another object of the present invention is to provide a multiplier/reduction unit for which the operations for replacing components thereof or for its general maintenance can be easily performed.

Another object of the present invention is to provide a multiplier/reduction unit which can be adapted to various machines and to various levels of transmitted power.

Another object of the present invention is to provide a multiplier/reduction unit which can be manufactured with conventional technologies.

This aim, these objects, and others which will become apparent hereinafter are achieved by a multiplier/reduction unit for transmitting motion between two coaxial shafts, characterized in that it comprises two multiple-disk clutch assemblies which are adapted to associate, when actuated, the driving shaft with the driven shaft, a first one of said assemblies being actuated by hydraulic coupling means, a second one being actuated by mechanical coupling means.

Further characteristics and advantages of the present invention will become apparent from the following detailed description of two embodiments thereof, illustrated only by way of non-limitative examples in the accompanying drawings, wherein:
figure 1 is a sectional orthographic projection view of a multiplier/reduction unit according to the present invention;
figure 2 is a sectional orthographic projection view of a different embodiment of the unit of figure 1.

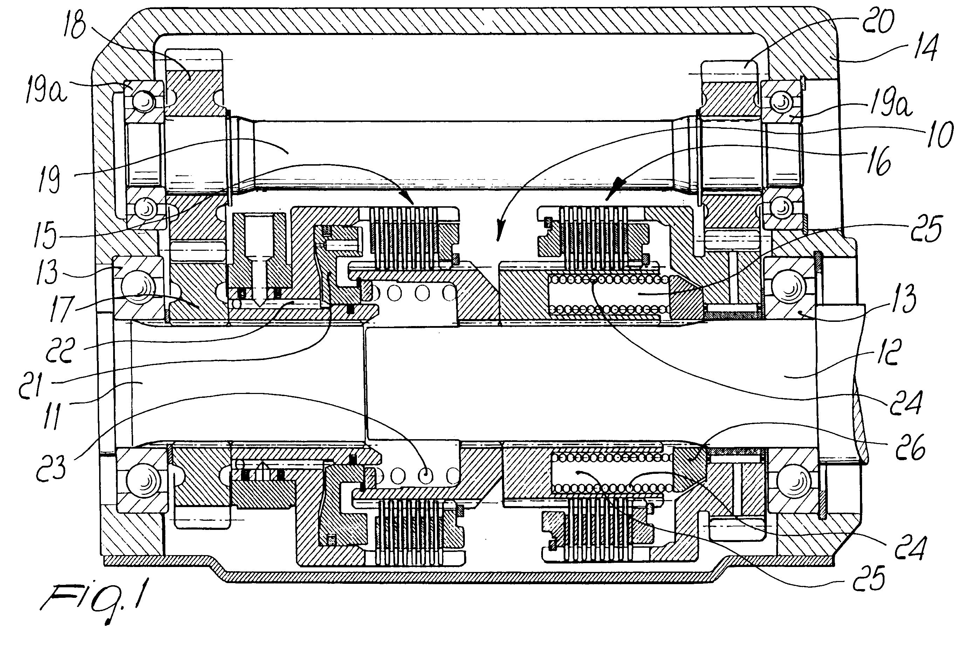

With particular reference to figure 1, a multiplier/reduction unit for transmitting motion between two coaxial shafts is generally designated by the reference numeral 10.

In this case, the unit 10 connects two coaxial shafts: one is a driving shaft, designated by the reference numeral 11, and the other one is a driven shaft, designated by the reference numeral 12.

The shafts 11 and 12, in this case, are supported by bearing systems 13 and are partially contained, together with the unit 10, inside a casing 14.

The unit 10 comprises two multiple-disk clutch assemblies, both of which are adapted to associate, when actuated, the driving shaft 11 with the driven shaft 12; a first one of said clutch assemblies, designated by the reference numeral 15, is actuated by hydraulic coupling means described hereinafter, whilst a second one, designated by the reference numeral 16, is actuated by mechanical coupling means also described hereinafter.

In this embodiment, the first clutch assembly 15 directly connects the driven shaft 12 to the driving shaft 11 through splined couplings, whilst the second clutch assembly 16 connects the driving shaft 11 to the driven shaft 12 thanks to the interposition of transmission means, which in this case are constituted by three gears: a first gear, designated by the reference numeral 17, has a splined coupling to the driving shaft 11 and meshes with a second gear, designated by the reference numeral 18, which is keyed on a shaft 19 supported by a bearing system 19a, and a third gear 20 is keyed at the other end of said shaft 19 and meshes with the second clutch assembly 16.

In this case, the hydraulic coupling means of the first clutch assembly 15 are constituted by an annular piston 21 slidingly contained in the first clutch assembly 15, the shape whereof also forms the cylinder which accommodates said piston.

The ducts 22 for fluidic connection to the hydraulic system are also provided in the first clutch assembly 15.

The first clutch assembly 15 is also provided with elastic counterthrust elements, constituted by a helical spring 23 arranged coaxially to the shafts 11 and 12.

The mechanical actuation means are instead constituted, in this case, by a plurality of helical springs 24 accommodated in seats 25 formed in the second clutch assembly 16, one end of said springs resting on a counterthrust ring 26 which is also fixed to the second clutch assembly 16.

Said helical springs 24 are arranged, up on assembly, parallel to the axes of the shafts 11 and 12 and keep the second clutch assembly 16 pushed against the first clutch assembly 15.

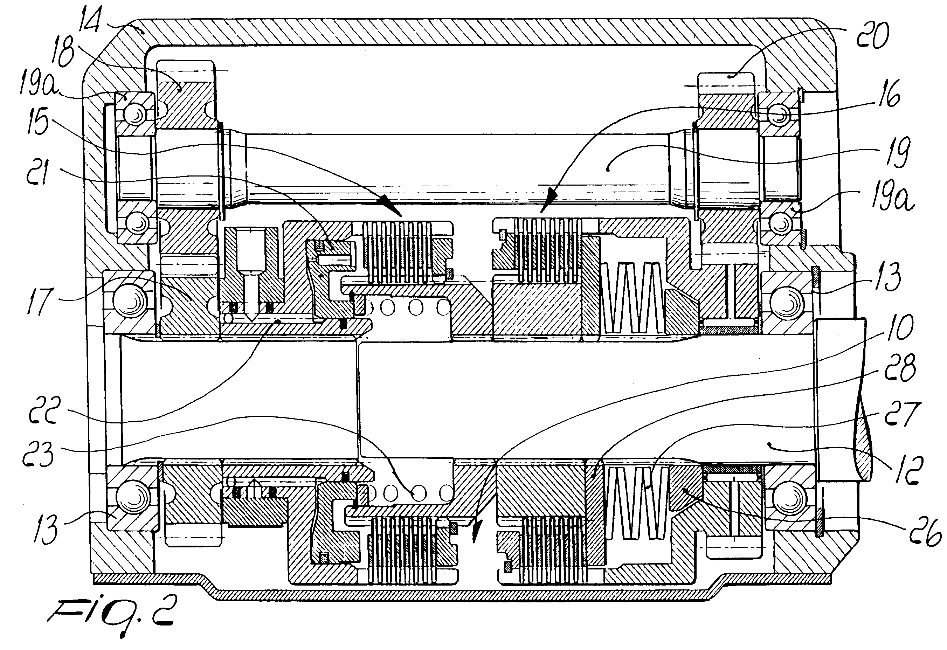

With particular reference to figure 2, a different embodiment of the unit 10 has a structure fully similar to the one described above, except for the mechanical coupling means, which in this case are constituted by a plurality of Belleville spring washers 27, which provide counterthrust for the second clutch assembly 16 through the interposition of a disk-shaped element 28 also having a splined coupling to the driven shaft 12.

In practice, it has been observed that the present invention has achieved its intended aim and objects; it should in fact be noted that even in case of accidental shutdown of the machine motor whereon the unit according to the present invention is installed, or in case of failure of the hydraulic system, the mechanical actuations continue to transmit motion between the driven shaft and the driving shaft, avoiding unwanted interruptions in the machine operation.

The present invention is susceptible of modifications and variations, all of which are within the scope of the inventive concept; all the details may also be replaced with other technically equivalent elements.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multiplier/reduction unit for transmitting motion between two coaxial shafts (11,12), characterized in that it comprises two multiple-disk clutch assemblies (15,16), both of which are adapted to associate, when actuated, the driving shaft (11) with the driven shaft (12), a first one of said assemblies being actuated by hydraulic coupling means (21), a second one being actuated by mechanical coupling means (24).

2. A multiplier/reduction unit according to claim 1, characterized in that said mechanical coupling means are constituted by one or more helical springs (24) which are arranged parallel to said driving (11) and driven (12) shafts, are accommodated in corresponding seats (25) formed inside said second clutch assembly (16), and have a fixed base on a counterthrust ring (26) rigidly coupled to said second clutch assembly (16).

3. A multiplier/reduction unit according to claim 1, characterized in that said mechanical coupling means are constituted by one or more Belleville spring washers (27) which are coaxial to said driving (11) and driven (12) shafts, are accommodated inside said second clutch assembly (16), and provide counterthrust against it through the interposition of a disk-shaped element (28).

4. A multiplier/reduction unit, characterized in that said hydraulic actuation means comprise a disk-shaped piston (21) which slides within a cylinder formed by said first clutch assembly (15) itself, wherein the ducts (22) for fluidic connection to the hydraulic system are also formed.

5. A multiplier/reduction unit, characterized in that said first clutch assembly (15) also comprises elastic counterthrust means constituted by a helical spring (23) which is coaxial to said driving (11) and driven (12) shafts.

6. A multiplier/reduction unit according to one or more of the preceding claims, characterized in that said first clutch assembly (15) has a splined coupling with said driven shaft (12) and with said driving shaft (11).

7. A multiplier/reduction unit according to one or more of the preceding claims, characterized in that said second clutch assembly (16) has a splined coupling with said driven shaft (12), whilst it has an indirect coupling, provided by transmission means (17,18,20), to said driving shaft (11).
